# EUROPEAN PATENT APPLICATION

(11) **EP 4 242 053 A1**
(43) Date of publication of application: **13.09.2023**
(21) Application number: 21888028.4
(22) Date of filing: 24.03.2021
(51) Int. Cl.: B60M 3/00

(54) **HIGH-VOLTAGE SYSTEM OF TRAIN, AND TRAIN**

(30) Priority: 03.11.2020 CN 202011211746
(71) Applicant: CRRC Qingdao Sifang Co., Ltd., Qingdao, Shandong 266111 (CN)
(72) Inventor: JIANG, Xin, Qingdao, Shandong 266111 (CN); XU, Wantao, Qingdao, Shandong 266111 (CN); WANG, Tianyu, Qingdao, Shandong 266111 (CN); WU, Cong, Qingdao, Shandong 266111 (CN); HOU, Xiaoqiang, Qingdao, Shandong 266111 (CN)
(74) Representative: Dilg, Haeusler, Schindelmann Patentanwaltsgesellschaft mbH
(86) International application number: PCT/CN2021/082593
(87) International publication number: WO 2022/095324

(57) **Abstract**

Embodiments of the present application provide a high-voltage system for train and a train, wherein the high-voltage system for train includes: two high-voltage power supply units and one connection power supply unit; each of the high-voltage power supply units includes a pantograph, a main circuit breaker and a first traction transformer; the pantograph is connected to the first traction transformer through the main circuit breaker; the connection power supply unit includes a first high-voltage isolation switch and a second traction transformer; wherein the first high-voltage isolation switch is a three-point high-voltage isolation switch; one port of the first high-voltage isolation switch is connected to a primary side of the second traction transformer; two other ports of the first high-voltage isolation switch are respectively connected to primary sides of the first traction transformers in the two high-voltage power supply units. By connecting the three-point high-voltage isolation switch, the ability to supply power to three transformers is provided, different high-voltage power supply units may be switched and isolated, the normal operation of the train is guaranteed, and the safety and reliability of the train's operation are improved.

## Description

### CROSS-REFERENCE TO RELATED APPLICATION

The present application claims priority to Chinese application No. 2020112117469 filed on November 3, 2020, entitled "High-Voltage System of Train, and Train", which is hereby incorporated by reference in its entirety.

### FIELD OF TECHNOLOGY

The present application relates to the field of rail transit, in particular to a high-voltage system for train and a train.

### BACKGROUND

A high-voltage power supply system is the source of power for rail vehicles and a vital part of a train. Domestic electrified railways, or intercity mainline railways, are usually powered by the AC25kV traction power supply mode.

The high-voltage power supply system obtains AC25kV high-voltage alternating current from a high-voltage overhead contact system (OC) to provide power to traction equipment and other auxiliary facilities of a vehicle, and carry out detection and protection. The safety and reliability of the high-voltage power supply system during operation are directly related to the normal operation of the train.

With the rapid development of urban rail vehicles, especially of domestic intercity and urban rail transit, the reliability requirements for the performance of rail vehicle components, especially the requirements for vehicle starting performance are constantly increasing to ensure the safe, efficient and reliable operation of rail vehicles. As a result, the traditional "four-motor and four-trailer" design of eight-unit trains may not meet the train's starting performance requirements. Therefore, it is necessary to adopt a design configuration of "six-motor and two-trailer" or even more motor units, and the high-voltage system is required to be capable of supplying power to three transformers.

Therefore, an urgent problem to be solved is how to provide a high-voltage system for train and a train, with the ability to supply power to three transformers, so as to switch and isolate between different high-voltage power supply units, ensure the normal operation of the train, and improve the safety and reliability of the train during operation.

### SUMMARY

In order to overcome the defects, embodiments of the present application provide a high-voltage system for train and a train.

In a first aspect, an embodiment of the present application provides a high-voltage system for train including two high-voltage power supply units and one connection power supply unit. Each of the high-voltage power supply unit includes a pantograph, a main circuit breaker and a first traction transformer;
the pantograph is connected to the first traction transformer through the main circuit breaker;
the connection power supply unit includes a first high-voltage isolation switch and a second traction transformer, where the first high-voltage isolation switch is a three-point high-voltage isolation switch;
one port of the first high-voltage isolation switch is connected to a primary side of the second traction transformer; and
two other ports of the first high-voltage isolation switch are connected to primary sides of the first traction transformers in the two high-voltage power supply units, respectively.

According to an embodiment, in the high-voltage system for train,
the connection power supply unit further includes a second high-voltage isolation switch and a first current transformer, where the second high-voltage isolation switch is a two-point high-voltage isolation switch; and
one port of the second high-voltage isolation switch is connected to the first high-voltage isolation switch, and the other port of the second high-voltage isolation switch is connected to the second traction transformer through the first current transformer.

According to an embodiment, in the high-voltage system for train,
the connection power supply unit further includes two second current transformers;
the two second current transformers are respectively connected between the first high-voltage isolation switch and the first traction transformers in the two high-voltage power supply units.

According to an embodiment, in the high-voltage system for train,
the high-voltage power supply unit further includes an earthing protection switch;
the earthing protection switch is connected in parallel with the main circuit breaker and connected between the pantograph and the first traction transformer.

According to an embodiment, in the high-voltage system for train,
the high-voltage power supply unit further includes a transient inductance;
the transient inductance is connected between the main circuit breaker and the first traction transformer.

According to an embodiment, in the high-voltage system for train,
the high-voltage power supply unit further includes a third current transformer;
the third current transformer is connected between the main circuit breaker and the pantograph.

According to an embodiment, in the high-voltage system for train,
the high-voltage power supply unit further includes a first arrester and a second arrester;
where the first arrester is connected between the pantograph and the third current transformer; and
the second arrester is connected between the transient inductance and the first traction transformer.

According to an embodiment, in the high-voltage system for train,
the high-voltage power supply unit further includes a first voltage transformer and a second voltage transformer;
where the first voltage transformer is connected between the third current transformer and the main circuit breaker; and
the second voltage transformer is connected between the second arrester and the first traction transformer.

According to an embodiment, in the high-voltage system for train,
the two high-voltage power supply units provide redundancy for each other;
in case that one of the high-voltage power supply units fails, the pantograph corresponding to the failed high-voltage power supply unit is lowered and isolated from an overhead contact system, and the pantograph of the other high-voltage power supply unit is raised and connected to the overhead contact system to work.

In a second aspect, an embodiment of the present application provides a train.

The train is equipped with the above-mentioned high-voltage system for train.

As for the high-voltage system for train and the train provided by the embodiments of the present application, by connecting a three-point high-voltage isolation switch, the ability to supply power to three transformers is provided, different high-voltage power supply units may be switched and isolated, the normal operation of the train is guaranteed, and the safety and reliability of the train's operation are improved, thereby meeting the design requirements of "six-motor and two-trailer" for eight-unit trains while having simple system configuration and convenient control.

### BRIEF DESCRIPTION OF THE DRAWINGS

In order to illustrate more clearly the solutions in the embodiments of the present application or the prior art, the drawings needed in the description of the embodiments or the prior art will be briefly explained below. Obviously, the drawings in the following description show some embodiments of the present application. For those of ordinary skill in the art, other drawings can be obtained according to these drawings without paying creative labor.
FIG. 1 is a schematic structural diagram of a high-voltage system for train according to an embodiment of the present application; and
FIG. 2 is a schematic structural diagram of a high-voltage system for train according to another embodiment of the present application.

### DETAILED DESCRIPTION

In order to make the objectives, solutions and advantages of the embodiments of the present application clearer, the solutions in the embodiments of the present application will be described clearly and completely below in conjunction with the drawings in the embodiments of the present application. Obviously, the described embodiments are part of the embodiments of the present application, not all of them. Based on the embodiments of the present application, all other embodiments obtained by those of ordinary skill in the art without creative work belong to the protection scope of the present application.

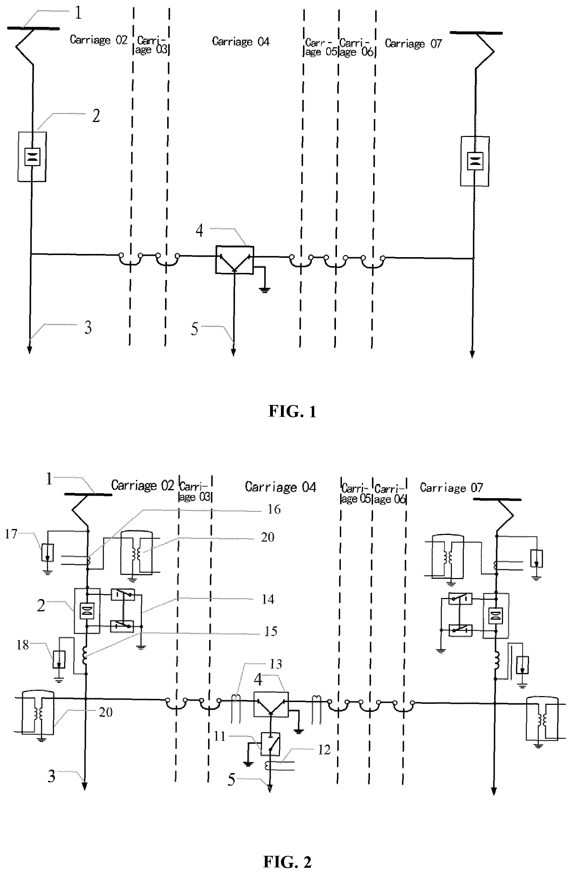

FIG. 1 is a schematic structural diagram of a high-voltage system for train according to an embodiment of the present application. As shown in FIG. 1, the high-voltage system for train according to the embodiment of the present application includes: two high-voltage power supply units and one connection power supply unit;
each of the high-voltage power supply unit includes a pantograph 1, a main circuit breaker 2 and a first traction transformer 3;
the pantograph 1 is connected to the first traction transformer 3 through the main circuit breaker 2;
the connection power supply unit includes a first high-voltage isolation switch 4 and a second traction transformer 5, where the first high-voltage isolation switch 4 is a three-point high-voltage isolation switch;
one port of the first high-voltage isolation switch 4 is connected to a primary side of the second traction transformer 5; and
two other ports of the first high-voltage isolation switch 4 are connected to primary sides of the first traction transformers 3 in the two high-voltage power supply units, respectively.

Specifically, the high-voltage system for train provided by the embodiment of the present application includes: two high-voltage power supply units and one connection power supply unit, where the two high-voltage power supply units are identical in structure and mutually redundant.

The following description is made based on the design of "six-motor and two-trailer" for eight-unit trains.

Each train is equipped with a high-voltage power supply unit in each of carriages 02 and 07. The high-voltage power supply unit includes: a pantograph 1, a main circuit breaker 2, and a first traction transformer 3, where the pantograph 1 is connected to the first traction transformer 3 through the main circuit breaker 2.

A connection power supply unit is provided in carriage 04. The connection power supply unit includes: a first high-voltage isolation switch 4 and a second traction transformer 5, where the first high-voltage isolation switch 4 is a three-point high-voltage isolation switch.

One port of the first high-voltage isolation switch 4 is connected to a primary side of the second traction transformer 5, and two other ports of the first high-voltage isolation switch 4 are connected to primary sides of the two first traction transformers 3, respectively.

Cable assemblies with high-voltage cable terminals (including cable assemblies with cable terminals, insulators for supporting the cable terminals and jumper wires between carriages) are laid on car roofs between carriages 02 and 07. The cable assemblies are configured to connect high-voltage equipment, the insulators are used for the insulation support between AC25kV and the car body, and the jumper wires between carriages is used for the high-voltage electric bridge between the carriages.

Between the carriages, the high-voltage cables are penetrated by means of jumper wires between carriages. The pantographs 1 receive AC25kV alternating current from a overhead contact system, and transmit the electric energy to the first traction transformers 3 and the second traction transformers 5 under the carriages 02, 04, and 07 through the high-voltage cables on roofs and car ends.

In an embodiment of the present application, the two high-voltage power supply units provide redundancy for each other. Generally, a manner of single-pantograph current collection is adopted, and the other pantograph is used as a backup. The pantograph introduces high-voltage alternating current from the overhead contact system into the train, and is raised or lowered by pneumatic control, so that the train can be connected to or disconnected from the power supply network.

Correspondingly, each high-voltage power supply unit is provided with a main circuit breaker corresponding to the pantograph, which serves as the main switch of the high-voltage main circuit of the train to switch and isolate the main circuit. Under normal conditions, the main circuit breakers operate in a manner corresponding to that of the pantographs, that is, a single unit operates and the other is standby. The main circuit breaker is disposed in the circuit downstream of the pantograph, serves to isolate the corresponding faulty pantograph, and is configured to quickly disconnect the main circuit in the event of a train fault to prevent the fault from expanding.

A three-point first high-voltage isolation switch 4 (bus high-voltage isolation switch) is disposed in an intermediate carriage (carriage 04) to enable the isolation of the faulty unit. When the high-voltage system is normal and fault-free, three points are all turned on to supply power to the three transformers; when the high-voltage system fails, different high-voltage power supply units can be switched and isolated according to the location of the fault.

It should be noted that the embodiments of the present application are based on the design of an eight-unit train with "six-motor and two-trailer", with two high-voltage power supply units disposed in carriages 02 and 07 respectively, and a connection power supply unit disposed in the carriage 04, which is only a specific example for describing the high-voltage system for train provided by the present application. In addition, the positions of the high-voltage power supply unit and the connection power supply unit in the train can also be adjusted according to the actual situation, which is not defined by the present application.

As for the high-voltage system for train provided by the embodiments of the present application, by connecting the three-point high-voltage isolation switch, the ability to supply power to three transformers is provided, different high-voltage power supply units may be switched and isolated, the normal operation of the train is guaranteed, and the safety and reliability of the train's operation are improved, thereby meeting the design requirements of "six-motor and two-trailer" for eight-unit trains while having simple system configuration and convenient control.

FIG. 2 is a schematic structural diagram of a high-voltage system for train according to another embodiment of the present application. As shown in FIG. 2, based on the foregoing embodiments, another embodiment of the present application provides a high-voltage system for train, in which
the connection power supply unit further includes a second high-voltage isolation switch 11 and a first current transformer 12, where the second high-voltage isolation switch 11 is a two-point high-voltage isolation switch; and
one port of the second high-voltage isolation switch 11 is connected to the first high-voltage isolation switch 4, and the other port thereof is connected to the second traction transformer 5 through the first current transformer 12.

Specifically, the connection power supply unit further includes: a two-point second high-voltage isolation switch 11 and a first current transformer 12, where one port of the second high-voltage isolation switch 11 is connected to the first high-voltage isolation switch 4, and the other port thereof is connected to the second traction transformer 5 through the first current transformer 12.

The first current transformer 12 is configured to detect overcurrent conditions of the high-voltage bus corresponding to the second traction transformer 5, and cooperates with the second high-voltage isolation switch 11 to isolate the second traction transformer 5 when a transformer of the intermediate carriage (carriage 04) fails.

On the basis of the forgoing embodiments, in this embodiment of the present application, a second high-voltage isolation switch and a first current transformer are added to the connection power supply unit to monitor faults that occurs in the transformer of the intermediate carriage in real-time. Upon occurrence of a fault, the fault can be quickly isolated, so as to ensure that the high-voltage system for train can still operate stably in the event of a fault, thereby improving the safety and reliability of the train's operation.

On the basis of the forgoing embodiments, according to an embodiment, in the high-voltage system for train,
the connection power supply unit further includes two second current transformers 13;
the two second current transformers 13 are correspondingly connected between the first high-voltage isolation switch 4 and the first traction transformers 3 in the two high-voltage power supply units, respectively.

Specifically, the connection power supply unit further includes two second current transformers 13 respectively connected between the first high-voltage isolation switch 4 and the first traction transformers 3 in the two corresponding high-voltage power supply units, and the distance between the position where the second current transformer 13 is disposed and the first high voltage isolation switch 4 is as small as possible.

By providing the two second current transformers 13 cooperating with the first current transformer 12 to detect the overcurrent of the high-voltage bus, the specific fault unit may be effectively located according to the logical relationship; the identified faulty unit is further isolated and processed, and then it is determined whether the working pantograph needs to be replaced.

On the basis of the forgoing embodiments, in this embodiment of the present application, by adding two second current transformers into the connection power supply unit, it is possible to detect overcurrent in the high voltage bus when cooperating with the first current transformer 12 and to locate the specific faulty unit according to a logical relationship, so that when a fault occurs, the fault can be quickly isolated, to ensure that the high-voltage system for train may still operate stably in the event of a fault, thereby improving the safety and reliability of the train's operation. The accuracy of fault unit location is improved compared to the solution using only the first current transformer alone.

On the basis of the forgoing embodiments, according to an embodiment, in the high-voltage system for train,
the high-voltage power supply unit further includes an earthing protection switch 14;
the earthing protection switch 14 is connected in parallel with the main circuit breaker 2 and connected between the pantograph 1 and the first traction transformer 3.

Specifically, the high-voltage power supply unit further includes an earthing protection switch 14 connected in parallel with the main circuit breaker 2 and connected between the pantograph 1 and the first traction transformer 3.

The earthing protection switch 14 is used for safe ground of the train during maintenance work to ensure the safety of the operator.

On the basis of the forgoing embodiments, according to an embodiment, in the high-voltage system for train,
the high-voltage power supply unit further includes a transient inductance 15;
the transient inductance 15 is connected between the main circuit breaker 2 and the first traction transformer 3.

Specifically, the high-voltage power supply unit further includes a transient inductance 15 connected between the main circuit breaker 2 and the first traction transformer 3.

By providing the transient inductance 15 in the front-end circuit of the first traction transformer 3, the traction system and the auxiliary power system may be effectively protected from the impact due to transient voltage generated during the closing operation of the main circuit breaker 2, thereby avoiding damage to system components due to excessive transient voltages generated during the closing operation of the main circuit breaker 2, and similar situations.

On the basis of the forgoing embodiments, according to an embodiment, in the high-voltage system for train,
the high-voltage power supply unit further includes a third current transformer 16;
the third current transformer 16 is connected between the main circuit breaker 2 and the pantograph 1.

Specifically, the high-voltage power supply unit further includes a third current transformer 16 connected between the main circuit breaker 2 and the pantograph 1.

The third current transformer 16 is disposed on the high-voltage main line of the high-voltage power supply unit to collect the current signal on the overhead contact system side for monitoring and protecting in the event of a complete train fault, and to cooperate with other current transformers in the system to logically locate the faulty unit in the event of an overcurrent fault, and can cooperate with the first high-voltage isolation switch 4 to effectively disconnect the corresponding contacts of the high-voltage isolation switch when the high-voltage main line fails on one side. Therefore, the working pantograph can be replaced at the cost of losing a certain amount of power, ensuring that the high-voltage system for train can still operate stably in the event of a fault, and improving the safety and reliability of the train's operation.

It should be noted that the current transformers are configured to measure the current in the circuit, and are classified, according to operating principle, into electromagnetic current transformers and electronic current transformers. In the embodiments of the present application, the current transformer may be selected according to the actual situation, which is not defined by this embodiment.

On the basis of the forgoing embodiments, according to an embodiment, in the high-voltage system for train,
the high-voltage power supply unit further includes a first arrester 17 and a second arrester 18;
the first arrester 17 is connected between the pantograph 1 and the third current transformer 16; and
the second arrester 18 is connected between the transient inductance 15 and the first traction transformer 3.

Specifically, the high-voltage power supply unit further includes: a first arrester 17 connected between the pantograph 1 and the third current transformer 16, and a second arrester 18 connected between the transient inductance 15 and the first traction transformer 3.

The first arrester 17 is configured to suppress the impact of overvoltage (such as lightning strikes) from the power supply network on high-voltage equipment, and reduce the impact of lightning surge occurred in the overhead contact system or overvoltage from circuit opening and closing on the insulation of machinery such as train transformers. The second arrester 18 is configured to suppress the impact of the train's own operating overvoltage on the equipment.

The arrester has an automatic recovery function. By adjusting the limit voltage of the arrester, the insulation gap between the voltage-applied part of the high-voltage equipment and the earth may be adjusted, which not only ensures the insulation gap requirements, but also achieves the purpose of miniaturization and lightness of the equipment box.

On the basis of the forgoing embodiments, according to an embodiment, in the high-voltage system for train,
the high-voltage power supply unit further includes a first voltage transformer 19 and a second voltage transformer 20;
the first voltage transformer 19 is connected between the third current transformer 16 and the main circuit breaker 2; and
the second voltage transformer 20 is connected between the second arrester 18 and the first traction transformer 3.

Specifically, the high-voltage power supply unit further includes a first voltage transformer 19 and a second voltage transformer 20. The first voltage transformer 19 is connected between the third current transformer 16 and the main circuit breaker 2; and the second voltage transformer 20 is connected between the second arrester 18 and the first traction transformer 3.

The first voltage transformer 19 is configured to measure a voltage on line side, and convert the voltage on line side having a value of 25kV into a voltage signal on line side, which is displayed on a voltage meter on line side and configured to determine and control the closing of the main circuit breaker. The second voltage transformer 20 is configured to perform logic protection control on the traction system, and to detect a voltage of the main circuit. Furthermore, it may be determined whether a fault has occurred based on the detected voltage and current values of the main circuit.

It should be noted that the voltage transformers may be classified into multiple categories according to the functions, filling materials and sealing levels. In the embodiments of the present application, the voltage transformer may be selected according to the actual situation, which is not defined by this embodiment.

Further, in an embodiment of the present application, it is necessary to use current transformers and voltage transformers to monitor the current and voltage in the circuit so as to determine whether there are problems such as overcurrent. When the determination is performed, the maximum current and voltage (alarm threshold) that the current transformer and voltage transformer can withstand may be adjusted according to the actual situation, which is not defined by this embodiment.

On the basis of the forgoing embodiments, according to an embodiment, in the high-voltage system for train,
the two high-voltage power supply units provide redundancy for each other;
in case that one of the high-voltage power supply units fails, the pantograph corresponding to the failed high-voltage power supply unit is lowered and isolated from an overhead contact system, and the pantograph of the other high-voltage power supply unit is raised and connected to the overhead contact system to work.

Specifically, the high-voltage system for train includes two high-voltage power supply units and a connection power supply unit, where the two high-voltage power supply units are identical in structure and mutually redundant. In case that one of the high-voltage power supply units fails, the pantograph corresponding to the failed high-voltage power supply unit is lowered and isolated from the overhead contact system, and the first high-voltage isolation switch is used to isolate the faulty unit; the pantograph corresponding to the other high-voltage power supply unit is raised and connected to the overhead contact system to work. Therefore, in case that one of the high-voltage power supply units fails to work normally, the normal operation of the motor train unit can still be guaranteed.

Further, as three traction transformers are involved in the power supply in the embodiments of the present application, in the event of a fault in the unit where the second traction transformer of the connection power supply unit is located, the first high-voltage isolation switch and the second high-voltage isolation switch are used to isolate the unit where the second traction transformer is located to avoid the expansion of the fault.

In the embodiment of the present application, two mutually redundant high-voltage power supply units are provided, in case that one of the high-voltage power supply units fails to work normally, the faulty part may be switched and replaced in time to ensure the normal operation of the motor train unit.

Another embodiment of the present application provides a train equipped with the above-mentioned high-voltage system for train.

Specifically, the train is equipped with the above-mentioned high-voltage system for train, which can collect the overcurrent signal in the circuit in real time through the current transformers and the voltage transformers to determine whether a fault occurs. If a fault occurs, the faulty unit can be located and isolated in time. By connecting a three-point high-voltage isolation switch, the ability to supply power to three transformers is provided, different high-voltage power supply units may be switched and isolated, the normal operation of the train is guaranteed, and the safety of the train's operation is improved. The specific embodiments of the train are the same as those of the above-mentioned control method, and will not be repeated here.

Taking the design of an eight-unit train with "six-motor and two-trailer" as an example for illustration, the train equipment configuration table is as follows:

**Table 1 Equipment configuration table**

| Equipment location | Equipment name | carriage 02 | carriage 03 | carriage 04 | carriage 05 | carriage 06 | carriage 07 |
|---|---|---|---|---|---|---|---|
| Car roof | Pantograph | 1 | | | | | 1 |
| | Voltage transformer | 2 | | 1 | | | 2 |
| | High-voltage isolation switch | | | 2 | | | |
| | Main circuit breaker + Earthing protection switch | 1 | | | | | 1 |
| | Arrester | 2 | | | | | 2 |
| | Current Transformer | 1 | | 3 | | | 1 |
| | Transient inductance | 1 | | | | | 1 |
| | High-voltage cable assembly | 1 | | | | | |

As for the train provided by the embodiments of the present application, by connecting the three-point high-voltage isolation switch, the ability to supply power to three transformers is provided, different high-voltage power supply units may be switched and isolated, the normal operation of the train is guaranteed, and the safety and reliability of the train's operation are improved, thereby meeting the design requirements of "six-motor and two-trailer" for eight-unit trains while having simple system configuration and convenient control.

The above-mentioned apparatus embodiments are merely illustrative, the units described as separate components may or may not be physically separated, and the components displayed as units may or may not be physical units, that is, they may be located at one place or distributed across multiple network units. Some or all of the modules may be selected according to the actual needs to achieve the purpose of the embodiments. Those of ordinary skill in the art can understand and implement them without paying creative labor.

Through the above description of implementations, those of ordinary skill in the art can clearly understand that the various embodiments can be implemented by means of software and necessary general hardware platform, and of course, by means of hardware. Based on such understanding, a part of the solutions, which is essential or contributes to the prior art, can be embodied in the form of software products. The software products can be stored in computer-readable storage media, such as ROM/RAM, magnetic disk, compact disk, etc., including several instructions to cause a computer device (which can be a personal computer, server, or network device, etc.) to perform the methods described in various embodiments or a part of the embodiments.

Finally, it should be noted that the above embodiments are only used to illustrate the solutions of the present application, not to limit them; although the present application has been described in detail with reference to the above-mentioned embodiments, those of ordinary skill in the art should understand that they can still modify the solutions recorded in the above-mentioned embodiments, or make equivalent substitutions to a part of the features therein; these modifications or substitutions do not separate the essence of the corresponding solutions from the scope of the solutions of the embodiments of the present application.

## Claims

1. A high-voltage system for train, comprising: two high-voltage power supply units and one connection power supply unit; wherein
the high-voltage power supply unit comprises a pantograph (1), a main circuit breaker (2) and a first traction transformer (3);
the pantograph (1) is connected to the first traction transformer (3) through the main circuit breaker (2);
the connection power supply unit comprises a first high-voltage isolation switch (4) and a second traction transformer (5), the first high-voltage isolation switch (4) is a three-point high-voltage isolation switch;
one port of the first high-voltage isolation switch (4) is connected to a primary side of the second traction transformer (5); and
two other ports of the first high-voltage isolation switch (4) are connected to primary sides of the first traction transformers (3) in the two high-voltage power supply units, respectively.

2. The system of claim 1, wherein
the connection power supply unit further comprises a second high-voltage isolation switch (11) and a first current transformer (12), wherein the second high-voltage isolation switch (11) is a two-point high-voltage isolation switch; and
one port of the second high-voltage isolation switch (11) is connected to the first high-voltage isolation switch (4), and the other port of the second high-voltage isolation switch (11) is connected to the second traction transformer (5) through the first current transformer (12).

3. The system of claim 1 or 2, wherein
the connection power supply unit further comprises two second current transformers (13) correspondingly connected between the first high-voltage isolation switch (4) and the first traction transformers (3) in the two high-voltage power supply units, respectively.

4. The system of claim 3, wherein
the high-voltage power supply unit further comprises an earthing protection switch (14) connected in parallel with the main circuit breaker (2) and connected between the pantograph (1) and the first traction transformer (3).

5. The system of claim 4, wherein
the high-voltage power supply unit further comprises a transient inductance (15) connected between the main circuit breaker (2) and the first traction transformer (3).

6. The system of claim 5, wherein
the high-voltage power supply unit further comprises a third current transformer (16) connected between the main circuit breaker (2) and the pantograph (1).

7. The system of claim 6, wherein
the high-voltage power supply unit further comprises:
a first arrester (17) connected between the pantograph (1) and the third current transformer (16); and
a second arrester (18) connected between the transient inductance (15) and the first traction transformer (3).

8. The system of claim 7, wherein
the high-voltage power supply unit further comprises:
a first voltage transformer (19) connected between the third current transformer (16) and the main circuit breaker (2); and
a second voltage transformer (20) connected between the second arrester (18) and the first traction transformer (3).

9. The system of any one of claims 4 to 8, wherein
the two high-voltage power supply units provide redundancy for each other;
in case that one of the high-voltage power supply units fails, the pantograph (1) corresponding to the failed high-voltage power supply unit is lowered and isolated from an overhead contact system, and the pantograph (1) of the other high-voltage power supply unit is raised and connected to the overhead contact system to work.

10. A train, equipped with the system of any one of claims 1 to 9.
